**Europäisches Patentamt**

**European Patent Office**

**Office européen des brevets**

(11) Veröffentlichungsnummer: **0 201 679 B1**

# EUROPÄISCHE PATENTSCHRIFT

(45) Veröffentlichungstag der Patentschrift: **13.03.91**

(51) Int. Cl.5: **H04N 7/133**

(21) Anmeldenummer: **86102957.7**

(22) Anmeldetag: **06.03.86**

(54) **Verfahren zur Bilddatenreduktion für digitale Fernsehsignale.**

(30) Priorität: **17.04.85 DE 3513877**

(43) Veröffentlichungstag der Anmeldung:
**20.11.86 Patentblatt 86/47**

(45) Bekanntmachung des Hinweises auf die
Patenterteilung:
**13.03.91 Patentblatt 91/11**

(84) Benannte Vertragsstaaten:
**AT DE FR GB IT**

(56) Entgegenhaltungen:
**EP-A- 0 084 270**
**EP-A- 0 123 456**
**DE-A- 3 029 190**
**US-A- 4 394 774**

**WISSENSCHAFTLICHE BERICHTE AEG-TELEFUNKEN, Band 52, Nr. 1-2, 1979, Seiten 48-56, Berlin, DE; G. KUMMERFELDT et al.: "Bildübertragung über Schmalbandkanäle"**

**IEEE TRANSACTIONS ON COMMUNICATIONS, Band COM-25, Nr. 11, November 1977, Seiten 1285-1292, IEEE, New York, US; WEN-HSIUNG CHEN et al.: "Adaptive coding of monochrome and color images"**

**IEEE TRANSACTIONS ON COMMUNICATIONS, Band COM-32, Nr. 3, März 1984, Seiten 225-232, IEEE, New York, US; WEN-HSIUNG CHEN et al.: "Scene adaptive coder"**

(73) Patentinhaber: **Siemens Aktiengesellschaft
Wittelsbacherplatz 2
W-8000 München 2(DE)**

(72) Erfinder: **Hölzlwimmer, Herbert, Dipl.-Ing.
Joseph-Seifriedstrasse 26
W-8000 München 50(DE)**
Erfinder: **Tengler, Walter, Dipl.-Ing.
Max-Rimmele-Strasse 46
W-8904 Friedberg(DE)**

**Beschreibung**

Die vorliegende Erfindung bezieht sich auf ein Verfahren zur Bilddatenreduktion für digitale Fernsehsignale, mit einer Vorverarbeitung der Signale mittels blockweisen Trans-formationsverfahrens, wobei ein transformiertes und quantisiertes Signal, das zu einem Zeitpunkt t-l erzeugt und in einem Bildspeicher abgelegt wurde, von einem transformierten Signal, das zu einem Zeitpunkt t entsteht, subtrahiert wird und wobei das derart gewonnene Differenzsignal einer Quantisierung unterzogen wird.

Bereits bekannte Verfahren zur Bilddatenreduktion können unterteilt werden in:
- DPCM( D ifferenz-P ulse c ode m odulations)-Verfahren,
- Transformationsverfahren,
- Hybridverfahren.

Bei DPCM-Verfahren wird Jeweils die Differenz zwischen einem aus bereits übertragenen Abtastwerten ermittelten Schätzwert und dem tatsächlichen Abtastwert ermittelt. Bei reinen DPCM-Codern erfolgt diese Vorhersage (Prädiktion) dreidimensional, d.h. sowohl innerhalb eines Bildes als auch von Bild zu Bild.

Bei Transformationsverfahren erfolgt eine Abbildung von dem Bild in den Transformationsbereich. Aus Aufwandsgründen wurden bisher nur zweidimensionale Transformationen realisiert.

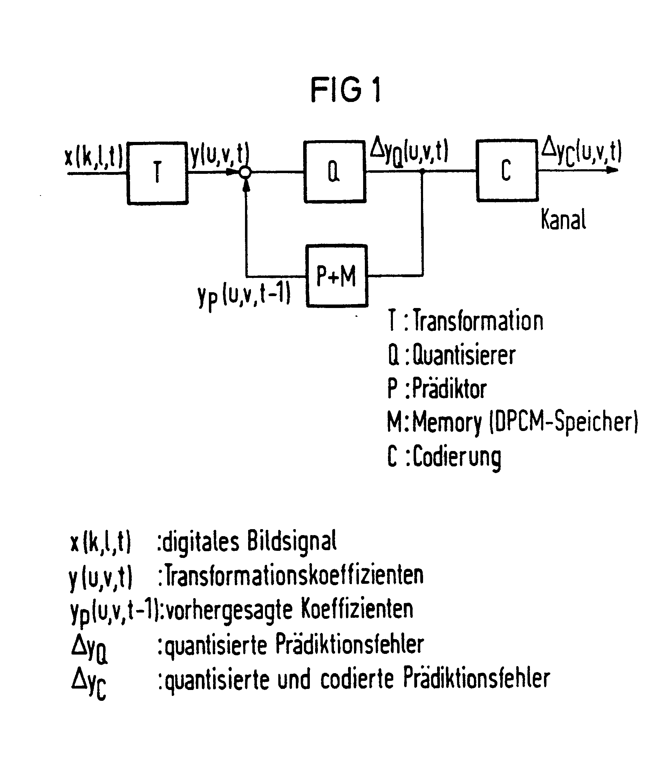

Die vorliegende Erfindung bezieht sich auf ein Hybridverfahren. Das Prinzip des Hybridverfahrens ist in Fig.1 dargestellt.

Die Hybridcodierung stellt eine Mischung aus Transformation und DPCM dar. Dabei erfolgt die Transformation innerhalb eines Bildes zweidimensional, Blockgröße 16x16 oder 8x8 Bildpunkte, während die DPCM von Bild zu Bild arbeitet. Das durch Transformation und/oder DPCM dekorrelierte Signal wird quantisiert und übertragen.

Im wesentlichen arbeiten sämtliche Hybridverfahren nach dem in Fig.1 gezeigten Schema. Bei ausgereiften Verfahren werden dabei die Funktionen Q, P und C adaptiv ausgeführt.

Aus der europäischen Patentanmeldung 82.3070263 ist ein Verfahren bekannt, das einen Coder mit folgenden wesentlichen Merkmalen verwendet:
- Dynamische Bit-Zuordnung:
  Für jeden zu codierenden Koeffizienten wird mittels eines Vorhersage-Algorithmus diejenige von mehreren Huffman-Code-Tabellen ausgewählt, welche die Bitrate minimiert.
- Laufl ä ngen-Codierung:
  Entlang einer bestimmten Abtastrichtung aufeinanderfolgend auftretende Nullen werden durch Lauflängen codiert.
- Konstante Kanalrate:
  Wird durch eine Kopplung des Quantisierers an die Pufferfüllung erreicht. Hierzu wird ein PI-Regler (mit proportionalem integrierenden Verhalten) verwendet.

Aus der Druckschrift "F.May: Codierung von Bildfolgen mit geringer Rate für gestörte Übertragungskanäle, NTG-Fachberichte, Bd.74, S.379-388" ist ein System zur Bildübertragung über schmalbandige Funkkanäle bei einer Übertragungsrate von 9,6 Kbit/s und eine Bildfolgefrequenz von 0,5 Bildern bekannt. Für dieses bekannte Verfahren sind mehrere Bit-Zuordnungsmatrizen vorgesehen, wobei immer die für den jeweiligen Block optimale ermittelt und in Form einer Klassenzugehörigkeit übertragen wird. Ferner werden bezüglich des quadratischen Fehlers optimale nichtlineare Quantisierungs-Kennlinien verwendet. Eine konstante Kanalrate wird durch Eingangs-Puffersteuerung erreicht, d.h. jedes Bild wird zuerst analysiert; sodann wird die Anzahl der zu übertragenden Koeffizienten solange verändert, bis die Kanalrate eingehalten wird.

Aus der Druckschrift "W.H.Chen, W.K. Pratt: Scene Adaptive Coder, IEEE Trans. Comm., Vol.Com32, No.3, March 1984" ist eine adaptive Bandbreiten-Kompressionstechnik bekannt, die eine diskrete Cosinus-Transformation verwendet (ähnlich europäischer Patentanmeldung 82.30 70 263).

Aus der Druckschrift "A.G. Tescher: Rate adaptive Communication, IEEE International Conference on Communication, 1978, pp.19.1.1.-19.1.6" ist ein Konzept für eine Bitratenregelung bei einer Quellencodierung bekannt.

In dem Fachbuch "W.K. Pratt: Image Transmission Techniques, Academic Press, New York, San Francisco, London, 1979" wird ein Überblick über Transformationstechniken der genannten Art gegeben.

Der vorliegenden Erfindung liegt die Aufgabe zugrunde, ein Verfahren der eingangs genannten Art zu schaffen, das gegenüber bekannten Verfahren eine wesentlich verbesserte Bildqualität bei gleicher Kanalrate ermöglicht.

Zur Lösung dieser Aufgabe für die vorliegende Erfindung wird ein Verfahren gemäß dem Oberbegriff des Patentanspruchs 1 vorgeschlagen, das durch die in dem kennzeichnenden Teil des Patentanspruchs 1 angegebenen Merkmale charakterisiert ist.

EP 0 201 679 B1

Vorteilhafte Weiterbildungen der vorliegenden Erfindung sind durch die in den Unteransprüchen angegebenen Merkmale gekennzeichnet.

Im folgenden wird die Erfindung anhand mehrerer Figuren im einzelnen beschrieben, wobei die betreffenden Figuren Jeweils Ausführungsbeispiele für die Erfindung darstellen.

Fig.1      zeigt eine schematische Darstellung des Grundkonzepts der bekannten Hybridcodierung.

Fig.2      zeigt ein Blockschaltbild eines vollständigen Übertragungssystems gemäß einem bevorzugten Ausführungsbeispiel, das nach dem erfindungsgemäßen Verfahren arbeitet.

Fig.3      zeigt ein Blockschaltbild eines Senders gemäß einem Ausführungsbeispiel innerhalb des in Fig.2 gezeigten Übertragungssystems.

Fig.4      zeigt ein Blockschaltbild eines Empfängers gemäß einem Ausführungsbeispiel innerhalb des in Fig.2 gezeigten Übertragungssystems.

Fig.5A      zeigt eine schematische Darstellung eines bevorzugten Ausführungsbeispiels der Art und Weise, wie ein Feld mit mxn Koeffizienten in Koeffizientengruppen in Form gedachter diagonaler Streifen unterteilt ist.

Fig.5B      zeigt eine schematische Darstellung, aus der hervorgeht, wie eine Pufferregelung in dem erfindungsgemäßen Verfahren auf die Coder-Ausgangsrate durch Begrenzen der Anzahl der zu übertragenden Koeffizientengruppen wirkt.

Fig.5C      zeigen, wie benachbarte Koeffizientengruppen zu und 5D einer Obergruppe zusammengefaßt werden.

Fig.6      zeigt die Kennlinien einer Pufferregelung.

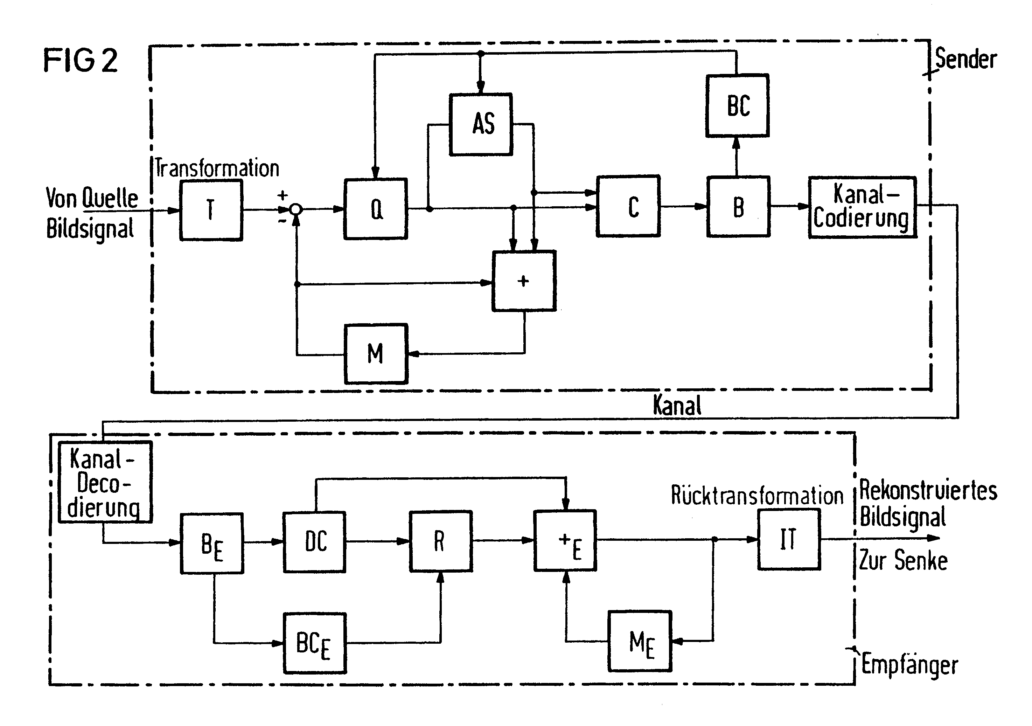

Im folgenden wird die Erfindung anhand der Figuren 2-6 beschrieben.

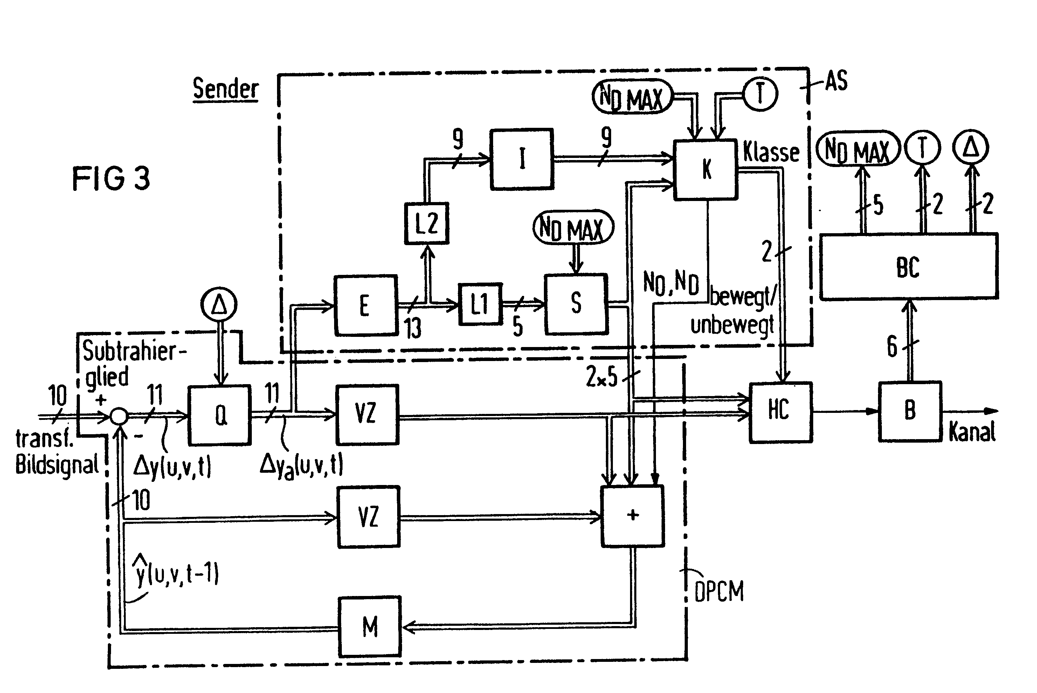

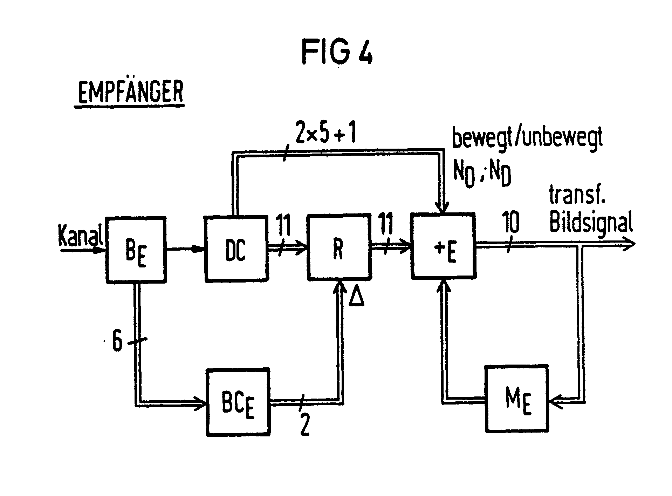

Bei der Erfindung wird die Diskrete Cosinus-Transformation (DCT) in einer Transformationsstufe T verwendet. Die Erfindung ist jedoch auch auf andere Transformationen anwendbar. Das Codier-Verfahren arbeitet nach den Blockschaltbildern gemäß Fig.3 (Sender) und Fig.4 (Empfänger).

Die ankommenden Bilder werden blockweise zweidimensional cosinustransformiert (Blockgröße 16x16 Bildpunkte). Die Blockgröße 8x8 laßt sich einfach durch Änderung von Huffman-Code-Tabellen 1B und der Bit-Zuordnungsmatrizen Tabelle 2 (siehe Anhang) realisieren. Die Differenz zwischen den so erhaltenen Spektralkoeffizienten und den entsprechenden Koeffizienten im DPCM-Speicher M wird dann entsprechend dem durch die Pufferregelung vorgegebenen Quantisierungsintervall $\Delta$ quantisiert (Block Q).

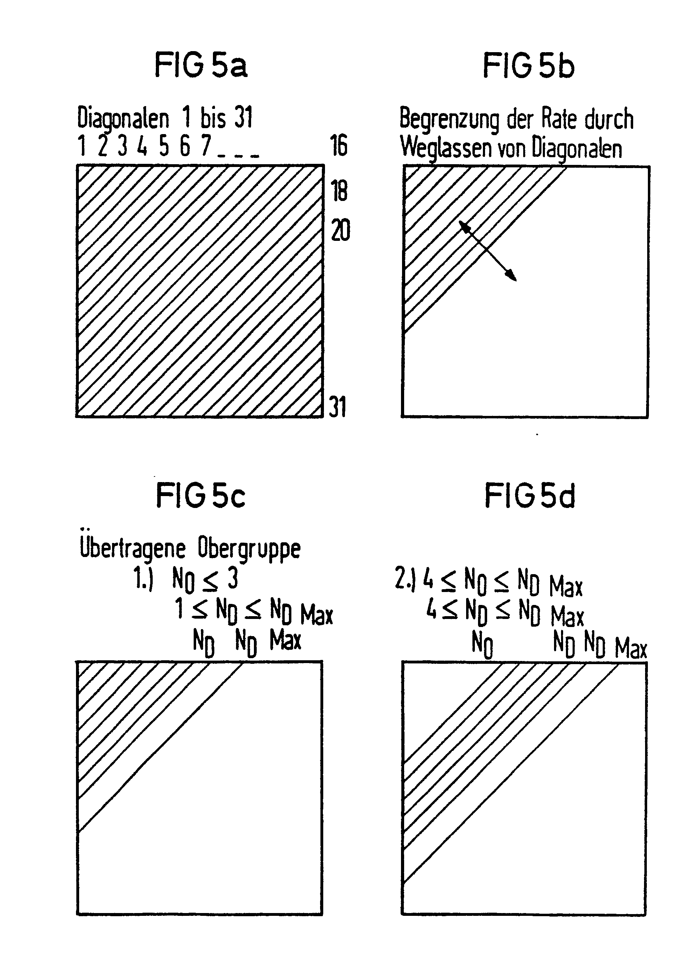

Aus dem quantisierten Prädiktionsfehler-Signal $\Delta y_Q(u,v,t)$ wird dann für jede Koeffizientengruppe (Fig.5A) die Energie bestimmt (Block E).

$$E(i) = \sum_{u=0}^{i-1} f_A \left( y_Q^2 (u, i - 1 - u) \right), \qquad (1)$$

$$\text{wobei} \quad f_A (x) \begin{cases} x & x < 2^{12} \\ = \\ 2^{12} & x \geq 2^{12} \end{cases}$$

Durch die Begrenzungsfunktion $f_A (x)$ ist gewährleistet, daß das Ergebnis t von $\Delta Y_Q^2$ nicht mit mehr Bits dargestellt wird, als für die weitere Verarbeitung notwendig ist: Der für die Summation verwendete Akkumulator hat ebenfalls nur 12 Bits, wobei ein dreizehntes Bit auf "1" gesetzt wird und bleibt, sobald einmal Überlauf aufgetreten ist.

Die auf diese Weise erhaltenen Energien E(i) werden über ein Netzwerk L1 an den Block S weitergegeben. L1 begrenzt dabei den Amplitudenbereich auf $E^*(i)$· ($0 < E\text{-}(i) < 16$), so daß $E^*$ (i) mit 5 Bits dargestellt werden kann.

In der Stufe S wird für jede Koeffizientengruppe aufgrund seiner Energie durch Vergleich mit in Tabellenform abgelegten Schwellenwerten ermittelt, ob sie zu übertragen ist. Die Nummer der ersten zu übertragenden Koeffizientengruppe liefert $N_O$, während die Nummer der letzten zu übertragenden Koeffizientengruppe $N_D$ liefert. Ist $N_O < 4$, so wird es gleich "1" gesetzt. Falls keine Koeffizientengruppe gefunden wurde, die zu übertragen ist, wird $N_O$ und $N_D$ gleich "1" gesetzt. Dadurch ist gewährleistet, daß auch bei der Klassifikation K der Block als unbewegt klassifiziert wird. Der Pufferregler kann durch Vergabe der

3

maximalen Anzahl von Koeffizientengruppen auf die Rate Einfluß nehmen.

Falls also $N_O$ größer als ein durch den Pufferregler vorgegebener Wert $N_{DMAX}$ ist, so ist $N_D = N_{DMAX}$ zu setzen.

Das Ergebnis des Blockes S wird zur Klassifikation K, zur Codierung HC und an einen bedingten Addierer (+) weitergegeben.

Neben dem Block S werden die Energien E(i) über L2, das die vier niederwertigsten Bits abschneidet, an einen Integrierer I weitergegeben. Der Integrierer I bildet aus E(i) das Signal $E_I(i)$

$$E_I(i) = E_I(i-1) + E(i) \qquad i = 2, \ldots, 31 \qquad (2)$$
$$\text{und} \quad E_I(1) = E(1)$$

Dabei werden nur die Bits mit der Wertigkeit 0...7 bei der Addition berücksichtigt, während Bit 8 ODERverknüpft mit dem Überlaufbit des Addierers das Bit 8 des Akkumulators ergibt, so daß man am Ausgang des Integrators wieder 9-Bit-Codeworte hat.

Die Stufe K führt folgende Operationen aus:

$$E_I(N_D) > T \quad \text{(Schranke } T = 0, 1, 2, 3 \text{ vom Pufferregler vorgegeben)} \qquad (3)$$
$$\rightarrow \quad \text{Block bewegt}$$
$$E_I(N_D) \leq T \qquad \rightarrow \quad \text{Block unbewegt}$$

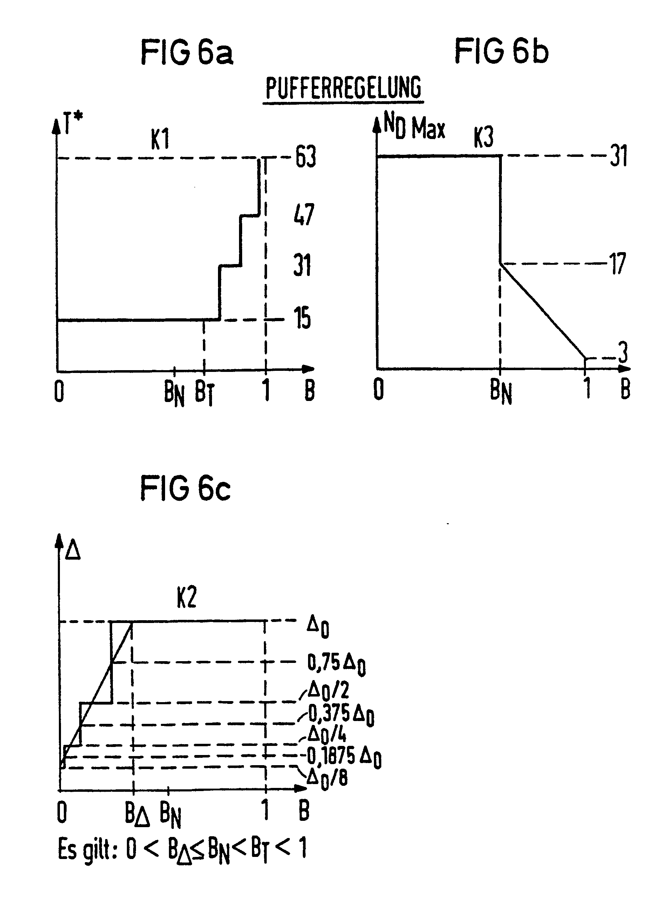

Durch das Abschneiden der vier niederwertigsten Bits bei der Energieberechnung ergeben sich aus Fig.6 Kurve K1 die in Beziehung (3) angegebenen vier Werte für die Schranke T.

Ist der Block unbewegt, wird er der "Unbewegt"-Klasse 4 zugeordnet. Ist der Block bewegt und damit zu übertragen, so wird die Energie der zu übertragenden Obergruppe

$$E_G = \begin{cases} E_I(N_D) - E_I(N_O - 1) & N_O \neq 1 \\ E_I(N_D) - E_I(1) & N_O = 1 \end{cases} \qquad (4)$$

bestimmt und der Block mit Hilfe von $E_G$ einer von drei "Bewegt"-Klassen zugeordnet.

Die beiden notwendigen Klassengrenzen $G(N_O, N_D, 1)$ und $G(N_O, N_D, 2)$ werden wie folgt ermittelt:

$$G(N_O, N_D, k) = \begin{cases} E_{Hg}(N_D,k) - E_{Hg}(N_O-1,k) & \text{wenn } N_O \neq 1 \\ E_{Hg}(N_D,k) - E_{Hg}(1,k) & \text{wenn } N_O = 1 \end{cases} \qquad (5)$$

$$E_{Hg}(N_D,k) = 1/2 \sum_{i=1}^{N_D} i \, (E_H(B(i,1,k)) + E_H(B(i,1,k+1)))$$

$E_H$ : bei der Generierung der Huffman-Code-Tabellen vorausgesetzte mittlere Energie (= Varianz)

$B(i,j,k)$ : Zuordnungsmatrix f der Huffman-Code-Tabellen für Klasse K (Tabelle 2)

$E_{Hg}$ : Energie bis Diagonale $N_D$, gemittelt über Klasse k und k + 1

$$
\begin{aligned}
E_G &\geq G(N_0, N_D, 1) && \Rightarrow \text{Klasse 1} \\
G(N_0, N_D, 1) &> E_G \geq G(N_0, ND, 2) && \Rightarrow \text{Klasse 2} \quad\quad (6) \\
E_G &< G(N_0, N_D, 2) && \Rightarrow \text{Klasse 3}
\end{aligned}
$$

Die Fallunterscheidung bei der Berechnung von $G(N_0,N_D,k)$ und $E_G$ kommt daher, daß der Gleichanteil bei allen Klassen mit der gleichen Huffman-Code-Tabelle für maximale Varianz codiert wird. Seine Energie bleibt daher bei der Klassifikation unberücksichtigt. Die zu übertragende Obergruppe wird dann codiert (Block HC) und in den Ausgangspuffer (Block B) geschrieben. Hierzu werden die Code-Tabellen 1 bis 7 der Tabelle 1 verwendet, welche über die Zuordnungsmatrizen in Tabelle 2 für jeden Koeffizienten ausgewählt werden. Bei der Codierung werden die sog. "modified" Huffman-Codes verwendet. Dabei werden Werte $'y'$ < $y_{esc}$ huffmancodiert. Bei $'y' > y_{esc}$ wird ein Escapewort gesendet, gefolgt vom Wert von y in natürlichem Code. Das Quantisierungsintervall kann die Werte $\Delta_0$, $\Delta_0/2$, $\Delta_0/4$, $\Delta_0/8$ annehmen. Dem entsprechen 255, 511, 1023, 2047 Amplitudenstufen. Daher haben diese natürlichen Codeworte unterschiedliche Längen (8, 9, 10, 11 Bits).

Zusätzlich muß für jeden Block die Klassenzugehörigkeit und die Obergruppe ($N_0$, $N_D$) übertragen werden. Für diesen Overhead werden die folgenden Bitraten benötigt:

1. Fall: 2 Bit wenn k = 4 ("Unbewegt"-Klasse)
2. Fall: 2 Bit + die in Tabelle 1B ("Huffman-Code-Tabellen für Obergruppe und Klasse) angegebene mittlere Wortlänge, wenn k = 1 bis 3

Zuletzt wird der DPCM-Speicher auf den aktuellen Stand gebracht. Dabei sind die Obergruppe und die Klassenzugehörigkeit zu berücksichtigen

$$
y'(u,v,t) = y'(u,v,t-1) \text{ wenn } k = 4 \vee \left[(u+v+1) < N_0\right] \vee
$$

$$
\left[(u+v+1) > N_D\right] \quad\quad (7)
$$

$$
y'(u,v,t) = y'(u,v,t-1) + \Delta y_Q(u,v,t) \quad\quad\quad \text{sonst.}
$$

Wie bereits erwähnt, wird eine konstante Kanalrate durch Ändern der Schranke "bewegt"/"unbewegt" T, des Quantisierungs-intervalles $\Delta$ und der maximal zu übertragenden Diagonale $N_{DMAX}$ erreicht. In Abhängigkeit der Pufferfüllung werden über die nichtlinearen Kennlinien K1 bis K3 die Großen T, $\Delta$, $N_{DMAX}$ ermittelt (Fig.6).

Im Bereich BN < B(k) < 1 (Kennlinie K3) wird die Rate über $N_{DMAX}$ geregelt.

Für B$\Delta$ < B(k) < $B_N$ folgt keine Regelung. Ist O < B(k) < B$\Delta$, so erfolgt die Pufferregelung über das Quantisierungsintervall $\Delta$ (Kennlinie K2). Dabei kann $\Delta$ nur Werte annehmen, die die folgende Ungleichung erfüllen:

$$
0 \leq \text{int} \left(\text{ld}\left(\frac{\Delta_0}{\Delta}\right)\right) \leq 3 \quad\quad\quad (8)
$$

Wie bereits erwähnt, muß das Quantisierungsintervall auch bei der Codierung mit berücksichtigt werden.

Bei sehr vollem Puffer B(k) > $B_T$ (Kennlinie K1) wird noch die Schranke T über eine quadratische Kennlinie K1 erhöht. Die Erhöhung der Schranke "bewegt"/"unbewegt" geschieht dann auf zwei Wegen:

a) Erhöhung von T über Kennlinie K1
b) Reduzierung von $N_{DMAX}$ und damit der Gesamtenergie ($E_G$ über Kennlinie K3.

Durch Punkt b) wird eine sehr effiziente Rauschunterdrückung bei vollem Puffer erreicht.

Wesentliche Neuerungen gegenüber bekannten Verfahren.

I. Pufferregelung.
- Art der Begrenzung der Bitrate durch Weglassen von Koeffizientengruppen, wenn der Puffer vollläuft. Dabei wird die Anzahl der Koeffizientengruppen über einen Proportionalregler geregelt:
- Regelung der Rate über das Quantisierungsintervall bei leerlaufendem Puffer mit einem Proportionalregler. Dabei kann das Quantisierungsintervall nur die Werte $\Delta_o$, $\Delta_o/2$, $\Delta_o/4$, $\Delta_o/8$ annehmen.
- Art der Erkennung geänderter Blöcke durch Berechnung der Energie des quantisierten Signals. Dies ist identisch mit einer Kopplung der Schranke "bewegt"/"unbewegt" T an das Quantisierungsintervall. Ein guter Wert für T ist T = $N^2/12$. Dieses T ist über einen weiten Bereich der Pufferfüllung konstant.
- Erhöhung der Schranke T bei vollaufendem Puffer über eine quadratische Kennlinie.
- Der Regler für die Anzahl der maximal zu übertragenden Diagonalen und der Regler für das Quantisierungsintervall arbeiten nie gemeinsam, sondern je nach Pufferfül-lung jeweils nur einer.
- Die Tatsache, daß für die Änderungserkennung für Blöcke nur die Koeffizientengruppen berücksichtigt werden, die auch übertragen werden.

2. Codierung.
- Adaptive Huffman-Codierung durch feste Zuordnung der Huffman-Code-Tabellen für drei "Bewegt"-Klassen (bisher gibt es dynamische Zuordnung der Huffman-Code-Tabellen (HCT) /1/ und feste Zuordnung von nichtlinearen optimalen n-Bit-Maxquantisierern /2/.
- Klassifizierung aufgrund des quantisierten Signals.
- Art der Bestimmung der Klassengrenzen aus der Zuordnung der Huffman-Code-Tabellen und der Varianz, für die die HC1 generiert wurden.
- Art der Erkennung und Codierung geänderter Obergruppen innerhalb eines Blocks (bei /1/ durch Lauflängen-Codierung und End of Block Codewort).
- Die Tatsache, daß für die Änderungserkennung für Blöcke nur die Koeffizientengruppen berücksichtigt werden, die auch übertragen werden.

TABELLE 1: HUFFMANCODETABELLEN
**********************************

A) FUER KOEFFIZIENTEN

DAS VORZEICHEN WIRD BEI CODEWORTNUMMERN UNGLEICH NULL AN DEN HUFFMANCO
DER TABELLE ANGEHAENGT: 1) KLEINER NULL  ---> VZ=1
                        2) GROESSER NULL ---> VZ=0

(DESWEGEN IST DIE CODEWORTLAENGE BEI DEN ENTSPRECHENDEN CODEWORTERN UM
EINS GROESSER ALS DIE LAENGE DES CODES IN DER TABELLE.)

CODETABELLE NUMMER:           1
ANZAHL DER WOERTER:          511
STREUUNG:                      0.75
RESTWAHRSCHEINLICHKEIT:        0.00100
TATS. RESTWAHRSCHEINL.:        0.00021
MITTLERE WORTLAENGEN:          1.8520
ENTROPIE                       1.6386

| CODEWORTNUMMER | | HUFFMANCODE | WORTLAENGE | WAHRSCHEINL. |
|---|---|---|---|---|
| 0 | | 0 | 1 | 0.609749 |
| 1 | | 10 | 3 | 0.165409 |
| 2 | | 110 | 4 | 0.025191 |
| 3 | | 1110 | 5 | 0.003837 |
| 4 | | 11110 | 6 | 0.000584 |
| 5 | ESCAPEWORT | 11111 | 14 | 0.000089 |
| 6 | | ESC | 14 | 0.000014 |
| 7 | | ESC | 14 | 0.000002 |
| 8 | | ESC | 14 | 0.000000 |
| 9 | | ESC | 14 | 0.000000 |
| 10 | | ESC | 14 | 0.000000 |

UND SO FORT BIS NW/2= 255

CODETABELLE NUMMER:           2
ANZAHL DER WOERTER:          511
STREUUNG:                      1.50
RESTWAHRSCHEINLICHKEIT:        0.00100
TATS. RESTWAHRSCHEINL.:        0.00086
MITTLERE WORTLAENGEN:          2.6491
ENTROPIE                       2.5680

| CODEWORTNUMMER | | HUFFMANCODE | WORTLAENGE | WAHRSCHEINL. |
|---|---|---|---|---|
| 0 | | 00 | 2 | 0.375299 |
| 1 | | 1 | 2 | 0.190455 |
| 2 | | 010 | 4 | 0.074325 |
| 3 | | 0110 | 5 | 0.029006 |
| 4 | | 01110 | 6 | 0.011319 |
| 5 | | 011110 | 7 | 0.004417 |
| 6 | | 0111110 | 8 | 0.001724 |
| 7 | | 01111110 | 9 | 0.000673 |
| 8 | ESCAPEWORT | 01111111 | 17 | 0.000263 |
| 9 | | ESC | 17 | 0.000102 |
| 10 | | ESC | 17 | 0.000040 |
| 11 | | ESC | 17 | 0.000016 |
| 12 | | ESC | 17 | 0.000006 |
| 13 | | ESC | 17 | 0.000002 |

UND SO FORT BIS NW/2= 255

CODETABELLE NUMMER:           3
ANZAHL DER WOERTER:          511
STREUUNG:                      3.00
RESTWAHRSCHEINLICHKEIT:        0.00100
TATS. RESTWAHRSCHEINL.:        0.00068

ENTROPIE      3.5418

| CODEWORTNUMMER | | HUFFMANCODE | WORTLAENGE | WAHRSCHEINL. |
|---|---|---|---|---|
| 0 | | 00 | 2 | 0.209620 |
| 1 | | 10 | 3 | 0.140314 |
| 2 | | 110 | 4 | 0.092652 |
| 3 | | 010 | 4 | 0.057880 |
| 4 | | 1110 | 5 | 0.036158 |
| 5 | | 0110 | 5 | 0.022588 |
| 6 | | 11110 | 6 | 0.014111 |
| 7 | | 01110 | 6 | 0.008815 |
| 8 | | 111110 | 7 | 0.005507 |
| 9 | | 011110 | 7 | 0.003440 |
| 10 | | 1111110 | 8 | 0.002149 |
| 11 | | 0111110 | 8 | 0.001342 |
| 12 | | 11111110 | 9 | 0.000839 |
| 13 | | 01111110 | 9 | 0.000524 |
| 14 | | 111111110 | 10 | 0.000327 |
| 15 | | 111111111 | 10 | 0.000204 |
| 16 | ESCAPEWORT | 01111111 | 17 | 0.000128 |
| 17 | | ESC | 17 | 0.000080 |
| 18 | | ESC | 17 | 0.000050 |
| 19 | | ESC | 17 | 0.000031 |
| 20 | | ESC | 17 | 0.000019 |
| 21 | | ESC | 17 | 0.000012 |

UND SO FORT BIS NW/2= 255

| | |
|---|---|
| CODETABELLE NUMMER: | 4 |
| ANZAHL DER WOERTER: | 511 |
| STREUUNG: | 6.00 |
| RESTWAHRSCHEINLICHKEIT: | 0.00800 |
| TATS. RESTWAHRSCHEINL.: | 0.00636 |
| MITTLERE WORTLAENGEN: | 4.5988 |
| ENTROPIE | 4.5335 |

| CODEWORTNUMMER | | HUFFMANCODE | WORTLAENGE | WAHRSCHEINL. |
|---|---|---|---|---|
| 0 | | 000 | 3 | 0.110967 |
| 1 | | 01 | 3 | 0.093179 |
| 2 | | 100 | 4 | 0.073647 |
| 3 | | 110 | 4 | 0.058209 |
| 4 | | 1010 | 5 | 0.046007 |
| 5 | | 1110 | 5 | 0.036363 |
| 6 | | 0010 | 5 | 0.028741 |
| 7 | | 10110 | 6 | 0.022716 |
| 8 | | 11110 | 6 | 0.017954 |
| 9 | | 00110 | 6 | 0.014191 |
| 10 | | 101110 | 7 | 0.011216 |
| 11 | | 111110 | 7 | 0.008865 |
| 12 | | 001110 | 7 | 0.007007 |
| 13 | | 1011110 | 8 | 0.005538 |
| 14 | | 1111110 | 8 | 0.004377 |
| 15 | | 0011110 | 8 | 0.003460 |
| 16 | | 10111110 | 9 | 0.002734 |
| 17 | | 11111110 | 9 | 0.002161 |
| 18 | | 101111110 | 10 | 0.001708 |
| 19 | | 101111111 | 10 | 0.001350 |
| 20 | | 111111110 | 10 | 0.001067 |
| 21 | | 111111111 | 10 | 0.000843 |
| 22 | ESCAPEWORT | 0011111 | 16 | 0.000667 |
| 23 | | ESC | 16 | 0.000527 |
| 24 | | ESC | 16 | 0.000416 |
| 25 | | ESC | 16 | 0.000329 |
| 26 | | ESC | 16 | 0.000260 |
| 27 | | ESC | 16 | 0.000206 |

UND SO FORT BIS NW/2= 255

```
CODETABELLE NUMMER:             5
ANZAHL DER WOERTER:             511
STREUUNG:                       12.00
RESTWAHRSCHEINLICHKEIT:         0.00800
TATS. RESTWAHRSCHEINL.:         0.00759
MITTLERE WORTLAENGEN:           5.5889
ENTROPIE                        5.5313
```

| | | | | |
|---|---|---|---|---|
| 0 | | 0000 | 4 | 0.057114 |
| 1 | | 001 | 4 | 0.052314 |
| 2 | | 010 | 4 | 0.046509 |
| 3 | | 1000 | 5 | 0.041348 |
| 4 | | 1010 | 5 | 0.036760 |
| 5 | | 1100 | 5 | 0.032681 |
| 6 | | 1110 | 5 | 0.029054 |
| 7 | | 0110 | 5 | 0.025830 |
| 8 | | 10010 | 6 | 0.022964 |
| 9 | | 10110 | 6 | 0.020416 |
| 10 | | 11010 | 6 | 0.018150 |
| 11 | | 11110 | 6 | 0.016136 |
| 12 | | 00010 | 6 | 0.014346 |
| 13 | | 01110 | 6 | 0.012754 |
| 14 | | 100110 | 7 | 0.011339 |
| 15 | | 101110 | 7 | 0.010080 |
| 16 | | 110110 | 7 | 0.008962 |
| 17 | | 111110 | 7 | 0.007967 |
| 18 | | 000110 | 7 | 0.007083 |
| 19 | | 011110 | 7 | 0.006297 |
| 20 | | 1001110 | 8 | 0.005598 |
| 21 | | 1011110 | 8 | 0.004977 |
| 22 | | 1101110 | 8 | 0.004425 |
| 23 | | 1111110 | 8 | 0.003934 |
| 24 | | 0001110 | 8 | 0.003497 |
| 25 | | 0111110 | 8 | 0.003109 |
| 26 | | 10011110 | 9 | 0.002764 |
| 27 | | 10111110 | 9 | 0.002457 |
| 28 | | 11011110 | 9 | 0.002185 |
| 29 | | 00011110 | 9 | 0.001942 |
| 30 | | 00011111 | 9 | 0.001727 |
| 31 | | 01111110 | 9 | 0.001535 |
| 32 | | 100111110 | 10 | 0.001365 |
| 33 | | 101111110 | 10 | 0.001213 |
| 34 | | 101111111 | 10 | 0.001079 |
| 35 | | 110111110 | 10 | 0.000959 |
| 36 | | 011111110 | 10 | 0.000853 |
| 37 | | 011111111 | 10 | 0.000758 |
| 38 | | 1001111110 | 11 | 0.000674 |
| 39 | | 1001111111 | 11 | 0.000599 |
| 40 | | 1101111110 | 11 | 0.000533 |
| 41 | | 1101111111 | 11 | 0.000474 |
| 42 | ESCAPEWORT | 1111111 | 16 | 0.000421 |
| 43 | | ESC | 16 | 0.000374 |
| 44 | | ESC | 16 | 0.000333 |
| 45 | | ESC | 16 | 0.000296 |
| 46 | | ESC | 16 | 0.000263 |
| 47 | | ESC | 16 | 0.000234 |

UND SO FORT BIS NW/2= 255

```
CODETABELLE NUMMER:             6
ANZAHL DER WOERTER:             511
STREUUNG:                       24.00
RESTWAHRSCHEINLICHKEIT:         0.01000
TATS. RESTWAHRSCHEINL.:         0.00989
MITTLERE WORTLAENGEN:           6.5860
ENTROPIE                        6.5307
```

| | | | |
|---|---|---|---|
| 0 | 00000 | 5 | 0.028976 |
| 1 | 0001 | 5 | 0.027729 |
| 2 | 0010 | 5 | 0.026145 |
| 3 | 0100 | 5 | 0.024652 |
| 4 | 0110 | 5 | 0.023244 |
| 5 | 10000 | 6 | 0.021917 |
| 6 | 10010 | 6 | 0.020665 |
| 7 | 10100 | 6 | 0.019485 |
| 8 | 10110 | 6 | 0.018372 |
| 9 | 11000 | 6 | 0.017323 |
| 10 | 11010 | 6 | 0.016333 |
| 11 | 11100 | 6 | 0.015400 |
| 12 | 11110 | 6 | 0.014521 |
| 13 | 00110 | 6 | 0.013692 |
| 14 | 01010 | 6 | 0.012910 |
| 15 | 01110 | 6 | 0.012172 |
| 16 | 100010 | 7 | 0.011477 |
| 17 | 100110 | 7 | 0.010822 |
| 18 | 101010 | 7 | 0.010203 |
| 19 | 101110 | 7 | 0.009621 |
| 20 | 110010 | 7 | 0.009071 |
| 21 | 110110 | 7 | 0.008553 |
| 22 | 111010 | 7 | 0.008065 |
| 23 | 111110 | 7 | 0.007604 |
| 24 | 000010 | 7 | 0.007170 |
| 25 | 001110 | 7 | 0.006760 |
| 26 | 010110 | 7 | 0.006374 |
| 27 | 011110 | 7 | 0.006010 |
| 28 | 1000110 | 8 | 0.005667 |
| 29 | 1001110 | 8 | 0.005343 |
| 30 | 1010110 | 8 | 0.005038 |
| 31 | 1011110 | 8 | 0.004750 |
| 32 | 1100110 | 8 | 0.004479 |
| 33 | 1101110 | 8 | 0.004223 |
| 34 | 1110110 | 8 | 0.003982 |
| 35 | 1111110 | 8 | 0.003755 |
| 36 | 0000110 | 8 | 0.003540 |
| 37 | 0011110 | 8 | 0.003338 |
| 38 | 0101110 | 8 | 0.003147 |
| 39 | 0111110 | 8 | 0.002968 |
| 40 | 10001110 | 9 | 0.002798 |
| 41 | 10001111 | 9 | 0.002638 |
| 42 | 10011110 | 9 | 0.002488 |
| 43 | 10111110 | 9 | 0.002346 |
| 44 | 11001110 | 9 | 0.002212 |
| 45 | 11011110 | 9 | 0.002085 |
| 46 | 11101110 | 9 | 0.001966 |
| 47 | 11111110 | 9 | 0.001854 |
| 48 | 00001110 | 9 | 0.001748 |
| 49 | 00111110 | 9 | 0.001648 |
| 50 | 00111111 | 9 | 0.001554 |
| 51 | 01011110 | 9 | 0.001465 |
| 52 | 01111110 | 9 | 0.001382 |
| 53 | 100111110 | 10 | 0.001303 |
| 54 | 101111110 | 10 | 0.001228 |
| 55 | 110011110 | 10 | 0.001158 |
| 56 | 110111110 | 10 | 0.001092 |
| 57 | 110111111 | 10 | 0.001030 |
| 58 | 111011110 | 10 | 0.000971 |
| 59 | 111111110 | 10 | 0.000915 |
| 60 | 000011110 | 10 | 0.000863 |
| 61 | 000011111 | 10 | 0.000814 |
| 62 | 010111110 | 10 | 0.000767 |
| 63 | 011111110 | 10 | 0.000723 |

| | | | |
|---|---|---|---|
| 65 | 1001111111 | 11 | 0. 000643 |
| 66 | 1011111110 | 11 | 0. 000606 |
| 67 | 1100111110 | 11 | 0. 000572 |
| 68 | 1100111111 | 11 | 0. 000539 |
| 69 | 1110111110 | 11 | 0. 000508 |
| 70 | 1110111111 | 11 | 0. 000479 |
| 71 | 1111111110 | 11 | 0. 000452 |
| 72 | 1111111111 | 11 | 0. 000426 |
| 73 | 0101111110 | 11 | 0. 000402 |
| 74 | 0101111111 | 11 | 0. 000379 |
| 75 | 0111111110 | 11 | 0. 000357 |
| 76 | 0111111111 | 11 | 0. 000337 |
| 77 | 10111111110 | 12 | 0. 000318 |
| 78 | 10111111111 | 12 | 0. 000299 |
| 79 ESCAPEWORT | 1010111 | 16 | 0. 000282 |
| 80 | ESC | 16 | 0. 000266 |
| 81 | ESC | 16 | 0. 000251 |
| 82 | ESC | 16 | 0. 000237 |
| 83 | ESC | 16 | 0. 000223 |
| 84 | ESC | 16 | 0. 000210 |

UND SO FORT BIS NW/2= 255

CODETABELLE NUMMER: 7
ANZAHL DER WOERTER: 511
STREUUNG: 48. 00
RESTWAHRSCHEINLICHKEIT: 0. 03000
TATS. RESTWAHRSCHEINL.: 0. 02943
MITTLERE WORTLAENGEN: 7. 6155
ENTROPIE 7. 5384

| CODEWORTNUMMER | HUFFMANCODE | WORTLAENGE | WAHRSCHEINL. |
|---|---|---|---|
| 0 | 000000 | 6 | 0. 014453 |
| 1 | 00010 | 6 | 0. 014141 |
| 2 | 00100 | 6 | 0. 013735 |
| 3 | 00110 | 6 | 0. 013342 |
| 4 | 00111 | 6 | 0. 012959 |
| 5 | 01000 | 6 | 0. 012587 |
| 6 | 01010 | 6 | 0. 012226 |
| 7 | 01100 | 6 | 0. 011876 |
| 8 | 01110 | 6 | 0. 011535 |
| 9 | 100000 | 7 | 0. 011204 |
| 10 | 100010 | 7 | 0. 010883 |
| 11 | 100100 | 7 | 0. 010571 |
| 12 | 100110 | 7 | 0. 010268 |
| 13 | 101000 | 7 | 0. 009973 |
| 14 | 101010 | 7 | 0. 009687 |
| 15 | 101100 | 7 | 0. 009409 |
| 16 | 101110 | 7 | 0. 009139 |
| 17 | 110000 | 7 | 0. 008877 |
| 18 | 110010 | 7 | 0. 008623 |
| 19 | 110100 | 7 | 0. 008375 |
| 20 | 110110 | 7 | 0. 008135 |
| 21 | 111000 | 7 | 0. 007902 |
| 22 | 111010 | 7 | 0. 007675 |
| 23 | 111100 | 7 | 0. 007455 |
| 24 | 000001 | 7 | 0. 007241 |
| 25 | 000010 | 7 | 0. 007034 |
| 26 | 000110 | 7 | 0. 006832 |
| 27 | 001010 | 7 | 0. 006636 |
| 28 | 010010 | 7 | 0. 006446 |
| 29 | 010110 | 7 | 0. 006261 |
| 30 | 011010 | 7 | 0. 006081 |
| 31 | 011110 | 7 | 0. 005907 |
| 32 | 1000010 | 8 | 0. 005737 |
| 33 | 1000110 | 8 | 0. 005573 |

| 35 | 1001110 | 8 | 0. 005258 |
|---|---|---|---|
| 36 | 1010010 | 9 | 0. 005107 |
| 37 | 1010110 | 8 | 0. 004961 |
| 38 | 1011010 | 8 | 0. 004818 |
| 39 | 1011011 | 9 | 0. 004680 |
| 40 | 1011110 | 9 | 0. 004544 |
| 41 | 1100010 | 8 | 0. 004416 |
| 42 | 1100110 | 8 | 0. 004289 |
| 43 | 1101010 | 8 | 0. 004166 |
| 44 | 1101110 | 8 | 0. 004046 |
| 45 | 1110010 | 8 | 0. 003930 |
| 46 | 1110110 | 8 | 0. 003818 |
| 47 | 1111010 | 8 | 0. 003708 |
| 48 | 0000110 | 8 | 0. 003602 |
| 49 | 0001110 | 8 | 0. 003498 |
| 50 | 0010110 | 8 | 0. 003398 |
| 51 | 0100110 | 8 | 0. 003301 |
| 52 | 0100111 | 8 | 0. 003206 |
| 53 | 0101110 | 8 | 0. 003114 |
| 54 | 0110110 | 8 | 0. 003025 |
| 55 | 0111110 | 8 | 0. 002938 |
| 56 | 10000110 | 9 | 0. 002854 |
| 57 | 10001110 | 9 | 0. 002772 |
| 58 | 10010110 | 9 | 0. 002692 |
| 59 | 10011110 | 9 | 0. 002615 |
| 60 | 10011111 | 9 | 0. 002540 |
| 61 | 10100110 | 9 | 0. 002467 |
| 62 | 10101110 | 9 | 0. 002397 |
| 63 | 10111110 | 9 | 0. 002328 |
| 64 | 11000110 | 9 | 0. 002261 |
| 65 | 11001110 | 9 | 0. 002196 |
| 66 | 11010110 | 9 | 0. 002133 |
| 67 | 11011110 | 9 | 0. 002072 |
| 68 | 11011111 | 9 | 0. 002013 |
| 69 | 11100110 | 9 | 0. 001955 |
| 70 | 11101110 | 9 | 0. 001899 |
| 71 | 11110110 | 9 | 0. 001844 |
| 72 | 00001110 | 9 | 0. 001792 |
| 73 | 00011110 | 9 | 0. 001740 |
| 74 | 00101110 | 9 | 0. 001690 |
| 75 | 00101111 | 9 | 0. 001642 |
| 76 | 01011110 | 9 | 0. 001595 |
| 77 | 01101110 | 9 | 0. 001549 |
| 78 | 01111110 | 9 | 0. 001505 |
| 79 | 01111111 | 9 | 0. 001461 |
| 80 | 100001110 | 10 | 0. 001419 |
| 81 | 100011110 | 10 | 0. 001379 |
| 82 | 100101110 | 10 | 0. 001339 |
| 83 | 100101111 | 10 | 0. 001301 |
| 84 | 101001110 | 10 | 0. 001263 |
| 85 | 101011110 | 10 | 0. 001227 |
| 86 | 101111110 | 10 | 0. 001192 |
| 87 | 101111111 | 10 | 0. 001158 |
| 88 | 110001110 | 10 | 0. 001125 |
| 89 | 110011110 | 10 | 0. 001092 |
| 90 | 110101110 | 10 | 0. 001061 |
| 91 | 110101111 | 10 | 0. 001031 |
| 92 | 111001110 | 10 | 0. 001001 |
| 93 | 111011110 | 10 | 0. 000972 |
| 94 | 111101110 | 10 | 0. 000944 |
| 95 | 111101111 | 10 | 0. 000917 |
| 96 | 000011110 | 10 | 0. 000891 |
| 97 | 000111110 | 10 | 0. 000866 |
| 98 | 000111111 | 10 | 0. 000841 |
| 99 | 010111110 | 10 | 0. 000817 |
| 100 | 010111111 | 10 | 0. 000793 |

| | | | |
|---|---|---|---|
| 102 | 011011111 | 10 | 0.000748 |
| 103 | 1000011110 | 11 | 0.000727 |
| 104 | 1000011111 | 11 | 0.000706 |
| 105 | 1000111110 | 11 | 0.000696 |
| 106 | 1000111111 | 11 | 0.000666 |
| 107 | 1010011110 | 11 | 0.000647 |
| 108 | 1010011111 | 11 | 0.000628 |
| 109 | 1010111110 | 11 | 0.000610 |
| 110 | 1010111111 | 11 | 0.000593 |
| 111 | 1100011110 | 11 | 0.000576 |
| 112 | 1100011111 | 11 | 0.000559 |
| 113 | 1100111110 | 11 | 0.000543 |
| 114 | 1100111111 | 11 | 0.000528 |
| 115 | 1110011110 | 11 | 0.000513 |
| 116 | 1110011111 | 11 | 0.000498 |
| 117 | 1110111110 | 11 | 0.000484 |
| 118 | 1110111111 | 11 | 0.000470 |
| 119 | 0000111110 | 11 | 0.000456 |
| 120 | 0000111111 | 11 | 0.000443 |
| 121 | ESCAPEWORT 11111 | 14 | 0.000431 |
| 122 | ESC | 14 | 0.000418 |
| 123 | ESC | 14 | 0.000406 |
| 124 | ESC | 14 | 0.000395 |
| 125 | ESC | 14 | 0.000383 |
| 126 | ESC | 14 | 0.000372 |

UND SO FORT BIS NW/2= 255


B) CODETABELLEN FUER UEBERTRAGENEN SUBBEREICH UND KLASSE

KLASSEN ZUGEHOERIGKEIT: 11 UNBEWEGTKLASSE
00 GROESSTER DETAILGEHALT
01 MITTLERER ----"--------
10 KLEINSTER ----"--------

BEI DEN BEWEGTKLASSEN WIRD DER SUBBEREICH WIE FOLGT CODIERT

1.) NO=1

ANZAHL DER DIAGONALEN IST GLEICH CODEWORTNUMMER IN
"HUFFMANCODETABELLE FUER SUBBEREICH"


2.) CODEWORTNUMMER 32 ESCAPEWORT FUER:

ND > 16 UND ZUGLEICH NO >= 4
ES WIRD ZUERST DAS ESCAPEWORT GESENDET UND DANN
ND WIRD MIT 4 BIT UND NO MIT 5 BIT UEBERTRAGEN
----> INSGESAMT 16 BIT

3.) FOLGENDE TABELLE GIBT FUER

4 <= NO <= 16  UND ZUGLEICH  4 <= ND <= 16

DIE CODEWORTNUMMER IN "HUFFMANCODETABELLE FUER SUBBEREICH"

MOEGLICHE KOMBINATIONEN FUER ND UND NO IHRE CODEWORTNUMMER IN
"HUFFMANCODETABELLE FUER SUBBEREICH"

| NO | ND ----> | | | | | | | | | | | | |
|---|---|---|---|---|---|---|---|---|---|---|---|---|---|
| | 4 | 5 | 6 | 7 | 8 | 9 | 10 | 11 | 12 | 13 | 14 | 15 | 16 |
| 4 | 33 | 34 | 35 | 36 | 37 | 38 | 39 | 40 | 41 | 42 | 43 | 44 | 45 |
| 6 | | 46 | 47 | 48 | 49 | 50 | 51 | 52 | 53 | 54 | 55 | 56 | 57 |

```
  8                    79   80   81   82   83   84   85   86   87
  9                         88   89   90   91   92   93   94   95
 10                              96   97   98   99  100  101  102
 11                                  103  104  105  106  107  108
 12                                       109  110  111  112  113
 13                                            114  115  116  117
 14                                                 118  119  120
 15                                                      121  122
 16                                                           123
```

HUFMANCODETABELLE FUER SUBBEREICH

ENTSCHEIDUNGSGEHALT:        6.94251
ENTROPIE:                   5.29115
MITTL. WORTLAENGE:          5.34360

| CODEWORTNUMMER | HUFFMANCODE | WORTLAENGE | WAHRSCHEINL. |
|---|---|---|---|
| 1 | 0000 | 4 | 0.055531 |
| 2 | 0100 | 4 | 0.055531 |
| 3 | 0101 | 4 | 0.055531 |
| 4 | 0110 | 4 | 0.055531 |
| 5 | 0111 | 4 | 0.055531 |
| 6 | 1000 | 4 | 0.055531 |
| 7 | 1001 | 4 | 0.055531 |
| 8 | 1010 | 4 | 0.055531 |
| 9 | 1011 | 4 | 0.055531 |
| 10 | 1100 | 4 | 0.055531 |
| 11 | 00010 | 5 | 0.027766 |
| 12 | 11010 | 5 | 0.027766 |
| 13 | 11011 | 5 | 0.027766 |
| 14 | 11100 | 5 | 0.027766 |
| 15 | 11101 | 5 | 0.027766 |
| 16 | 11110 | 5 | 0.027766 |
| 17 | 000110 | 6 | 0.013883 |
| 18 | 111110 | 6 | 0.013883 |
| 19 | 00011100 | 8 | 0.003471 |
| 20 | 00011110 | 8 | 0.003471 |
| 21 | 0001110100 | 10 | 0.000868 |
| 22 | 0001110110 | 10 | 0.000868 |
| 23 | 0001110111 | 10 | 0.000868 |
| 24 | 0001111100 | 10 | 0.000868 |
| 25 | 00011101010 | 11 | 0.000434 |
| 26 | 00011111010 | 11 | 0.000434 |
| 27 | 00011111011 | 11 | 0.000434 |
| 28 | 00011111100 | 11 | 0.000434 |
| 29 | 00011111101 | 11 | 0.000434 |
| 30 | 00011111110 | 11 | 0.000434 |
| 31 | 00011111111 | 11 | 0.000434 |
| 32 | 1111110 | 7 | 0.006941 |
| 33 | 001000 | 6 | 0.027766 |
| 34 | 1111111 | 7 | 0.006941 |
| 35 | 00100100 | 8 | 0.006941 |
| 36 | 001001010 | 9 | 0.003471 |
| 37 | 001001011 | 9 | 0.003471 |
| 38 | 001001100 | 9 | 0.003471 |
| 39 | 001001101 | 9 | 0.003471 |
| 40 | 001001110 | 9 | 0.003471 |
| 41 | 0010011110 | 10 | 0.001735 |
| 42 | 0010011111 | 10 | 0.001735 |
| 43 | 00101000000 | 11 | 0.000868 |
| 44 | 00101000001 | 11 | 0.000868 |

14

| | | | |
|---|---|---|---|
| 4? | 0010101 | 7 | 0. 013883 |
| 47 | 00101001 | 8 | 0. 006941 |
| 48 | 001010001 | 9 | 0. 003471 |
| 49 | 001011000 | 9 | 0. 003471 |
| 50 | 001011001 | 9 | 0. 003471 |
| 51 | 0010110100 | 10 | 0. 001735 |
| 52 | 00101000011 | 11 | 0. 000868 |
| 53 | 00101101010 | 11 | 0. 000868 |
| 54 | 00101101011 | 11 | 0. 000868 |
| 55 | 00101101100 | 11 | 0. 000868 |
| 56 | 001010000101 | 12 | 0. 000434 |
| 57 | 001011011010 | 12 | 0. 000434 |
| 58 | 0010111 | 7 | 0. 013883 |
| 59 | 001100000 | 9 | 0. 003471 |
| 60 | 001100001 | 9 | 0. 003471 |
| 61 | 001100010 | 9 | 0. 003471 |
| 62 | 0010110111 | 10 | 0. 001735 |
| 63 | 00110001100 | 11 | 0. 000868 |
| 64 | 00110001101 | 11 | 0. 000868 |
| 65 | 00110001110 | 11 | 0. 000868 |
| 66 | 00110001111 | 11 | 0. 000868 |
| 67 | 001011011011 | 12 | 0. 000434 |
| 68 | 001100100000 | 12 | 0. 000434 |
| 69 | 0011010 | 7 | 0. 013883 |
| 70 | 001100101 | 9 | 0. 003471 |
| 71 | 001100110 | 9 | 0. 003471 |
| 72 | 0011001001 | 10 | 0. 001735 |
| 73 | 00110010001 | 11 | 0. 000868 |
| 74 | 00110011100 | 11 | 0. 000868 |
| 75 | 00110011101 | 11 | 0. 000868 |
| 76 | 00110011110 | 11 | 0. 000868 |
| 77 | 001100100001 | 12 | 0. 000434 |
| 78 | 001100111110 | 12 | 0. 000434 |
| 79 | 00110110 | 8 | 0. 006941 |
| 80 | 001101110 | 9 | 0. 003471 |
| 81 | 0011011110 | 10 | 0. 001735 |
| 82 | 00110111110 | 11 | 0. 000868 |
| 83 | 00110111111 | 11 | 0. 000868 |
| 84 | 00111000000 | 11 | 0. 000868 |
| 85 | 00111000001 | 11 | 0. 000868 |
| 86 | 001100111111 | 12 | 0. 000434 |
| 87 | 001110000100 | 12 | 0. 000434 |
| 88 | 00111001 | 8 | 0. 006941 |
| 89 | 0011100010 | 10 | 0. 001735 |
| 90 | 00111000011 | 11 | 0. 000868 |
| 91 | 00111000110 | 11 | 0. 000868 |
| 92 | 00111000111 | 11 | 0. 000868 |
| 93 | 00111010000 | 11 | 0. 000868 |
| 94 | 001110000101 | 12 | 0. 000434 |
| 95 | 001110100010 | 12 | 0. 000434 |
| 96 | 00111011 | 8 | 0. 006941 |
| 97 | 00111010010 | 11 | 0. 000868 |
| 98 | 00111010011 | 11 | 0. 000868 |
| 99 | 00111010100 | 11 | 0. 000868 |
| 100 | 00111010101 | 11 | 0. 000868 |
| 101 | 001110100011 | 12 | 0. 000434 |
| 102 | 001110101100 | 12 | 0. 000434 |
| 103 | 001111000 | 9 | 0. 003471 |
| 104 | 00111010111 | 11 | 0. 000868 |
| 105 | 00111100100 | 11 | 0. 000868 |
| 106 | 00111100101 | 11 | 0. 000868 |
| 107 | 001110101101 | 12 | 0. 000434 |
| 108 | 001111001100 | 12 | 0. 000434 |
| 109 | 001111010 | 9 | 0. 003471 |
| 110 | 00111100111 | 11 | 0. 000868 |
| 111 | 00111101100 | 11 | 0. 000868 |

15

```
 113
 114          001111100       9       0.003471
 115         00111101110      11      0.000868
 116        001111011011      12      0.000434
 117        001111011110      12      0.000434
 118          001111101       9       0.003471
 119        001111011111      12      0.000434
 120        000111010110      12      0.000434
 121          001111110       9       0.003471
 122        000111010111      12      0.000434
 123          001111111       9       0.003471
```

TABELLE 2: ZUORDNUNGSMATRIZEN
♦♦♦♦♦♦♦♦♦♦♦♦♦♦♦♦♦♦♦♦♦♦♦♦♦♦♦♦♦♦♦

FESTE ZUORDNUNG DER HUFFMANCODETABELLEN
FUER DIE DREI BEWEGTKLASSEN

KLASSE 1

```
7 6 5 4 4 3 3 3 2 2 2 2 1 1 1 1
6 5 4 4 3 3 3 2 2 2 2 1 1 1 1 1
5 4 4 3 3 3 2 2 2 2 1 1 1 1 1 1
4 4 3 3 3 2 2 2 2 1 1 1 1 1 1 1
4 3 3 3 2 2 2 2 1 1 1 1 1 1 1 1
3 3 3 2 2 2 2 1 1 1 1 1 1 1 1 1
3 3 2 2 2 2 1 1 1 1 1 1 1 1 1 1
3 2 2 2 2 1 1 1 1 1 1 1 1 1 1 1
2 2 2 2 1 1 1 1 1 1 1 1 1 1 1 1
2 2 2 1 1 1 1 1 1 1 1 1 1 1 1 1
2 2 1 1 1 1 1 1 1 1 1 1 1 1 1 1
2 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
```

KLASSE 2

```
7 5 4 3 3 2 2 2 1 1 1 1 1 1 1 1
5 4 3 3 2 2 2 1 1 1 1 1 1 1 1 1
4 3 3 2 2 2 1 1 1 1 1 1 1 1 1 1
3 3 2 2 2 1 1 1 1 1 1 1 1 1 1 1
3 2 2 2 1 1 1 1 1 1 1 1 1 1 1 1
2 2 2 1 1 1 1 1 1 1 1 1 1 1 1 1
2 2 1 1 1 1 1 1 1 1 1 1 1 1 1 1
2 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
```

KLASSE 3

```
7 4 3 2 2 1 1 1 1 1 1 1 1 1 1 1
4 3 2 2 1 1 1 1 1 1 1 1 1 1 1 1
3 2 2 1 1 1 1 1 1 1 1 1 1 1 1 1
2 2 1 1 1 1 1 1 1 1 1 1 1 1 1 1
2 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
1 1 1 1 1 1 1 1 1 1 1 1 1 1 1 1
```

**Ansprüche**

1. Verfahren zur Bilddatenreduktion für digitale FernsehSignale, bei dem
   - die Signale blockweise transformiert werden,
   - aus dem transformierten Signal und dem Inhalt eines Bildspeichers ein Differenzsignal gebildet wird,
   - das Differenzsignal quantisiert wird,
   - zu dem quantisierten Differenzsignal der Inhalt des Bildspeichers addiert wird,
   - der Inhalt des Bildspeichers mit der so gebildeten Summe überschrieben wird,
   - das quantisierte Differenzsignal blockweise in Koeffizientengruppen unterteilt wird,
   - für jede Koeffizientengruppe eine Energie bestimmt wird, und
   - nur solche Koeffizientengruppen codiert und übertragen werden, deren Energie eine vorgegebene Schwelle übersteigt.

2. Verfahren nach Anspruch 1, dadurch **gekennzeichnet** daß Koeffizienten (y (u, v)), deren Matrixindizes (u, v) die Bedingung
   $$u + v = i - 1$$
   erfüllen, wobei u, v = 0 ... 15 und wobei u, v horizontale bzw. vertikale diskrete Frequenzen sind, jeweils zu einer Koeffizientengruppe (i = 1,...,31) zusammengefaßt werden.

3. Verfahren nach Anspruch 2,
   dadurch **gekennzeichnet,**
   daß die Energie nach der Formel

$$E(i) = \sum_{u=0}^{i-1} \left| \Delta y_Q (u,\ i-1-u) \right|^K$$

   berechnet wird, wobei i die Nummer einer Koeffizientengruppe ist, wobei k die Werte 1, 2, 3 ... haben kann und wobei $\Delta Y_Q(u, i - 1 - u)$ das quantisierte Differenzsignal der Koeffizienten (u, i - 1 - u) ist.

4. Verfahren nach Anspruch 2, dadurch **gekennzeichnet,** daß die Energie nach der Formel

$$E(i) = \sum_{u=0}^{i-1} (\Delta y_Q (u, i-1-u))^2$$

   berechnet wird, wobei $\Delta Y_Q(u, i - 1 - u)$ das quantisierte Differenzsignal der Koeffizienten (u, i - 1 - u) ist.

5. Verfahren nach Anspruch 2,
   dadurch **gekennzeichnet,**
   daß die Energie nach der Formel

$$E(i) = \sum_{u=0}^{i-1} \left| \Delta y_Q (u, i-1-u) \right|$$

   berechnet wird, wobei $\Delta y_Q(u, i - 1 - u)$ das quantisierte Differenzsignal der Koeffizienten (u, i - 1 - u) ist.

6. Verfahren nach einem der vorhergehenden Ansprüche, dadurch **gekennzeichnet,** daß für alle Amplitudenbereiche des zu quantisierenden Signals jeweils gleiche Quantisierungsintervalle verwendet werden, so daß sich eine sog. lineare Quantisierung ergibt.

7. Verfahren nach Anspruch 6,
dadurch **gekennzeichnet,**
daß die Quantisierung in Abhängigkeit von der Energie der Koeffizientengrupe ausgeführt wird und daß dazu eine aus vier linearen Quantisierungskennlinien, die sich in ihrem Quantisierungsintervall jeweils um den Faktor 2 unterscheiden, ausgewählt wird.

8. Verfahren nach einem der Ansprüche 2 bis 7, dadurch **gekennzeichnet,**
daß die Koeffizientengruppen blockweise zu einer Obergruppe zusammengefaßt werden, die jeweils durch eine erste, mit $N_O$ gekennzeichnete, und eine letzte, mit $N_D$ gekennzeichnete Koeffizientengruppe definiert ist, deren Energie erstmalig bzw. letztmalig über einer Schwelle liegt und innerhalb welcher auch Koeffizientengruppen auftreten können, deren Energien unterhalb dieser Schwelle liegen.

9. Verfahren nach Anspruch 8,
dadurch **gekennzeichnet,**
daß für die Koeffizientenobergruppen Gesamtenergien aus den bereits berechneten Energien der Koeffizientengruppen bestimmt werden.

10. Verfahren nach Anspruch 9,
dadurch **gekennzeichnet,**
daß die Koffizientenobergruppen hinsichtlich ihrer Gesamtenergie in vier Klassen eingeteilt werden, die einer Einteilung der möglichen Werte der Gesamtenergie in vier Intervalle entspricht, und daß die zum untersten Intervall der Gesamtenergie gehörige erste Klasse stets nicht übertragen wird, wogegen die zu den anderen drei Klassen mit höherer Gesamtenergie gehörigen Koeffizientenobergruppen codiert und übertragen werden.

11. Verfahren nach Anspruch 10,
dadurch **gekennzeichnet ,**
daß für jede Klasse von Koeffizientenobergruppen eine eigene festgewählte Zuordnung besteht, mit deren Hilfe den Koeffizienten Huffmancode-Tabellen zugeordnet werden.

12. Verfahren nach einem der vorhergehenden Ansprüche dadurch **gekennzeichnet,**
daß der Inhalt des Bildspeichers nur dann zu dem quantisierten Differenzsignal addiert wird, und daß der Inhalt des Bildspeichers nur dann mit der so gebildeten Summe überschrieben wird, wenn der Koeffizient, d.h. das quantisierte Differenzsignal übertragen wird, und daß andernfalls die Addition unterbleibt und der Inhalt des Bildspeichers nicht überschrieben wird.

13. Verfahren nach einem der vorhergehenden Ansprüche dadurch **gekennzeichnet,**
daß der ungleichförmige Datenfluß der zu übertragenden Koeffizienten mit Hilfe eines Puffers in einen Datenstrom konstanter Rate überführt wird.

14. Verfahren nach den Ansprüchen 10 und 13, dadurch **gekennzeichnet,**
daß der Pufferfüllstand mit Hilfe einer Pufferregeleinrichtung kontrolliert wird, indem die Schwelle für die Entscheidung, ob eine Koeffizientenobergruppe zu übertragen ist oder nicht, gedächtnisfrei je nach Füllungsgrad des Pufferspeichers verändert wird.

15. Verfahren nach den Ansprüchen 8 und 13, oder nach Anspruch 14,
dadurch **gekennzeichnet,**
daß der Pufferfüllstand mit Hilfe einer Pufferregeleinrichtung kontrolliert wird, indem die maximale Anzahl der zu übertragenden Koeffizientengruppen gedächtnisfrei je nach Füllungsgrad des Pufferspeichers verändert wird.

16. Verfahren nach Anspruch 13 oder einem der Ansprüche 14 oder 15, oder nach den Ansprüchen 14 und 15, dadurch **gekennzeichnet,**
daß der Pufferfüllstand mit Hilfe einer Pufferregeleinrichtung kontrolliert wird, indem die Auflösung des Quantisierers, d.h. das Quantisierungsintervall gedächtnisfrei je nach Füllungsgrad des Pufferspeichers verändert wird.

17. Verfahren nach den Ansprüchen 14, 15 und 16, dadurch **gekennzeichnet,**
daß die maximale Anzahl der zu übertragenden Koeffizientengruppen ($N_{DMax}$) über die Beziehung

$$N_{DMAX} = \begin{cases} 31 & \text{falls } B \leq B_N \\ \text{trun} \quad \dfrac{14\,B + 3\,B_N - 17}{B_N - 1} & \text{falls } B > B_N \end{cases}$$

aus dem Pufferfüllungsgrad B bestimmt wird, wobei trun (...) (truncated) die "Abschneide"-Funktion des dargestellten Ausdrucks ist und wobei $B_N$ vorzugsweise in dem Bereich 0,3 0,6 liegt, daß die Schwelle (T) für die Entscheidung, ob eine Koeffizientenobergruppe zu übertragen ist oder nicht über die Beziehung

$$T = \begin{cases} 0 & \text{falls } B \leq B_T \\ \text{trun}\left[ \left( \dfrac{B - B_T}{1 - B_T} + 1 \right)^2 - 0,5 \right] & \text{falls } B > B_T \end{cases}$$

verändert wird, wobei $B_T$ vorzugsweise in dem Bereich von 0,6...0,8 liegt,
und daß die Quantisiererauflösung $\Delta$ aus einer Zwischengröße $\Delta^*$, bestimmt wird, die sich aus dem Pufferspeicher-Füllungsgrad B nach der Beziehung

$$\Delta^* = \begin{cases} \text{falls } B \geq B_\Delta \\ \dfrac{\Delta 0}{8} \left( 7\,\dfrac{B}{B} + 1 \right) & \text{falls } B < B \end{cases}$$

ergibt, wobei die Quantisiererauflösung $\Delta$ aus dieser Zwischengröße $\Delta^*$ über folgende Bedingungen gegeben ist:
Wenn $0,75\,\Delta_o < \Delta^*$ ist, dann ist $\Delta = \Delta_o$,
wenn $0,375\,\Delta_o \leq \Delta^* < 0,75\,\Delta_o$ ist, dann ist $\Delta = \Delta_o/2$,
wenn $0,1875\,\Delta_o < \Delta^* < 0,375\,\Delta_o$ ist, dann ist $\Delta = \Delta_o/4$,
wenn $\Delta^* < 0,1875\,\Delta_o$ ist, dann ist $\Delta = \Delta_o/8$,
wobei $B_\Delta$ vorzugsweise Werte zwischen 0,4 und 0,6 hat.

18. Verfahren nach Anspruch 17,
dadurch **gekennzeichnet,**
daß für die Beziehungen für $N_{DMAX}$, T und jeweils Tabellenwerte festgelegt sind, die aufgrund der sechs höchstwertigen Bits des Pufferfüllungsgrades adressiert werden.

19. Verfahren nach einem der vorhergehenden Ansprüche,
dadurch **gekennzeichnet,**
daß zum Zwecke der Codierung sieben Codetabellen variabler Wortlänge verwendet werden, wobei eine Codetabelle (1) für sehr kleine Energien und eine Codetabelle (7) für sehr große Energien vorgesehen ist, und wobei jeweils die Codetabelle (i) von der Codetabelle (i-1) dadurch verschieden ist, daß sie für eine um den Faktor 4 größere Energie generiert ist.

**20.** Verfahren nach den Ansprüchen 8 und 19,
dadurch **gekennzeichnet,**
daß eine achte Codetabelle zur Codierung der zu übertragenden Obergruppen vorgesehen ist und daß eine Hilfstabelle vorgesehen ist, mit deren Hilfe für jede zu übertragende Obergruppe die dieser Obergruppe zugeordnete Codewortnummer der achten Codetabelle ausgewählt wird.

**21.** Verfahren nach Anspruch 20,
dadurch **gekennzeichnet,**
daß mit Hilfe der achten Codetabelle für jede Kombination der die Obergruppe eingrenzenden Koeffizientengruppen $N_O$ und $N_d$ eine zugeordnete Codewortnummer der achten Codetabelle ausgewählt wird.

**22.** Verfahren nach den Ansprüchen 19, 20 oder 21,
dadurch **gekennzeichnet,**

daß die vorgesehenen Codetabellen Variable-Length-Code-Tabellen sind.


**Claims**

**1.** Method for reducing the image data of digital television signals, in which
- the signals are transformed block-by-block,
- a differential signal is formed from the transformed signal and the contents of an image memory,
- the differential signal is quantized,
- the contents of the image memory are added to the quantized differential signal,
- the contents of the image memory are overwritten with the sum thus formed,
- the quantized differential signal is divided block-by-block into coefficient groups,
- an energy is determined for each coefficient group, and
- only coefficient groups whose energy exceeds a given threshold are coded and transmitted.

**2.** Method according to Claim 1, characterized in that coefficients ($y(u, v)$), whose matrix indices ($u, v$) fulfil the condition
$$u + v = i - 1$$
where $u, v = 0 \ldots 15$ and where $u, v$ are horizontal or vertical discreet frequencies, are combined in each case to form a coefficient group ($i = 1, \ldots, 31$).

**3.** Method according to Claim 2, characterized in that the energy is calculated according to the formula

$$E(i) = \sum_{u=0}^{i-1} \left| \Delta y_Q (u, i-1-u) \right|^K$$

where $i$ is the number of a coefficient group, where $k$ may have the values 1, 2, 3 ...., and where $\Delta y_Q(u, i - 1 - u)$ is the quantized differential signal of the coefficients ($u, i - 1 - u$).

**4.** Method according to Claim 2, characterized in that the energy is calculated according to the formula

$$E(i) = \sum_{u=0}^{i-1} \left( \Delta y_Q (u, i-1-u) \right)^2$$

where $\Delta y_Q(u, i - 1 - u)$ is the quantized differential signal of the coefficients ($u, i - 1 - u$).

**5.** Method according to Claim 2, characterized in that the energy is calculated according to the formula

EP 0 201 679 B1

$$E(i) = \sum_{u=0}^{i-1} \left| \Delta y_Q (u, i-1-u) \right|$$

where $\Delta y_Q(u, i - 1 - u)$ is the quantized differential signal of the coefficients $(u, i - 1 - u)$.

6. Method according to one of the preceding claims, characterized in that identical quantization intervals are used in each case for all amplitude ranges of the signal to be quantized so that a so-called linear quantization is obtained.

7. Method according to Claim 6, characterized in that the quantization is executed as a function of the energy of the coefficient group, and in that for this one of four linear quantization characteristics, whose quantization intervals differ in each case by the factor of 2, is selected.

8. Method according to one of Claims 2 to 7, characterized in that the coefficient groups are combined block-by-block to form a super-group, which is defined in each case by a first coefficient group, denoted by $N_o$, and a last coefficient group, denoted by $N_D$, the energy of which lies for the first time or for the last time, respectively, above a threshold, and within which coefficient groups whose energies lie below this threshold may also occur.

9. Method according to Claim 8, characterized in that total energies are determined for the coefficient super-groups from the already calculated energies of the coefficient groups.

10. Method according to Claim 9, characterized in that the coefficient super-groups are divided into four classes with respect to their total energy, which corresponds to a division of the possible values of the total energy into four intervals, and in that the first class associated with the lowest interval of the total energy is always not transmitted, whereas the coefficient super-groups associated with the other three classes with higher total energy are coded and transmitted.

11. Method according to Claim 10, characterized in that there exists for each class of coefficient super-groups a separate, fixed assignment, with the aid of which Huffmann code tables are assigned to the coefficients.

12. Method according to one of the preceding claims, characterized in that the contents of the image memory are only added to the quantized differential signal, and the contents of the image memory are only overwritten with the sum thus formed when the coefficient, that is to say the quantized differential signal, is transmitted, and in that otherwise the addition is omitted and the contents of the image memory are not overwritten.

13. Method according to one of the preceding claims, characterized in that the uneven data flow of coefficients to be transmitted is converted with the aid of a buffer into a data stream having a constant rate.

14. Method according to Claims 10 and 13, characterized in that the buffer filling level is controlled with the aid of a buffer control device, in that the threshold for the decision whether a coefficient super-group is to be transmitted or not is changed in a memory-free way depending on how full the buffer memory is in each case.

15. Method according to Claims 8 and 13, or according to Claim 14, characterized in that the buffer filling level is controlled with the aid of a buffer control device, in that the maximum number of coefficient groups to be transmitted is changed in a memory-free way depending on how full the buffer memory is in each case.

16. Method according to Claim 13, or one of Claims 14 or 15, or according to Claims 14 and 15, characterized in that the buffer filling level is controlled with the aid of a buffer control device, in that the resolution of the quantizer, that is to say the quantization interval, is changed in a memory-free way depending on how full the buffer memory is in each case.

22

17. Method according to Claims 14, 15 and 16, characterized in that the maximum number of coefficient groups ($N_{DMax}$) to be transmitted is determined via the relation

$$N_{DMAX} = \begin{cases} 31 & \text{if} & B \leqslant B_N \\ trun & \dfrac{14\ B + 3\ B_N - 17}{B_N - 1} & \text{if} & B > B_N \end{cases}$$

from the buffer filling level B, where trun (...) (truncated) is the "truncation" function of the represented expression and where $B_N$ preferably lies in the range 0.3 ... 0.6, in that the threshold (T) for the decision whether a coefficient super-group is to be transmitted or not is changed via the relation

$$T = \begin{cases} 0 & \text{if} & B \leqslant B_T \\ trun\left[ \left( \dfrac{B - B_T}{1 - B_T} + 1 \right)^2 - 0,5 \right] & \text{if} & B > B_T \end{cases}$$

where B preferably lies in the range from 0.6 ... 0.8, and in that the quantization resolution $\Delta$ is determined from an intermediate variable $\Delta^*$, which is obtained according to the relation

$$\Delta^* = \begin{cases} & \text{if} & B > B_\Delta \\ \dfrac{\Delta_0}{8} \left( 7\ \dfrac{B}{B} + 1 \right) & \text{if} & B < B \end{cases}$$

from the buffer memory filling level B, the quantization resolution $\Delta$ being obtained from this intermediate variable $\Delta^*$ according to the following conditions:

if $0.75\ \Delta_0 < \Delta^*$, then $\Delta = \Delta_0$,
if $0.375\ \Delta_0 < \Delta^* < 0.75\ \Delta_0$, then $\Delta = \Delta_0/2$,
if $0.1875\ \Delta_0 < \Delta^* < 0.375\ \Delta_0$, then $\Delta = \Delta_0/4$,
if $\Delta^* < 0.1875\ \Delta_0$, then $\Delta = \Delta_0/8$,
where $B_\Delta$ preferably has values between 0.4 and 0.6.

18. Method according to Claim 17, characterized in that table values which are addressed in each case on the basis of the six highest-order bits of the buffer filling level are defined for the relations for $N_{DMAX}$, T and [lacuna].

19. Method according to one of the preceding claims, characterized in that seven code tables of variable word length are used for the purpose of coding, one code table (1) being provided for very small energies and one code table (7) being provided for very large energies, and the code table (i) differing from the code table (i-1) in each case by being generated for a energy greater by the factor of 4.

20. Method according to Claims 8 and 9, characterized in that an eighth code table is provided for coding the super-groups to be transmitted, and in that an auxiliary table is provided, with the aid of which, for each supergroup to be transmitted, the codeword number, assigned to this super-group, of the eighth code table is selected.

21. Method according to Claim 20, characterized in that an assigned codeword number of the eighth code table is selected with the aid of the eighth code table for each combination of the coefficient groups $N_0$

and $N_d$ delimiting the super-group.

22. Method according to Claims 19, 20 or 21, characterized in that the code tables provided are variable-length code tables.

## Revendications

1. Procédé de réduction des données d'images pour des signaux numériques de télévision, selon lequel
   - des signaux sont transformés par blocs,
   - un signal de différence est formé à partir du signal transformé et du contenu d'une mémoire d'images,
   - le signal de différence est quantifié,
   - le contenu de la mémoire d'images est ajouté au signal de différence quantifié,
   - la somme ainsi formée est enregistrée en surinscription sur le contenu de la mémoire d'images,
   - le signal de différence quantifié est subdivisé par blocs en groupes de coefficients,
   - une énergie est déterminée pour chaque groupe de coefficients, et
   - seuls des groupes de coefficients, dont l'énergie dépasse un seuil prédéterminé, sont codés et transmis.

2. Procédé suivant la revendication 1, caractérisé par le fait que des coefficients (y(u,v)), dont les indices matriciels (uv,) satisfont à la condition
   $$u + v = i - 1$$
   avec u,v = 0 ... 15, u,v étant des fréquences horizontales ou verticales discrètes, sont rassemblés respectivement pour former un groupe de coefficients (i = 1,...,31).

3. Procédé suivant la revendication 2, caractérisé par le fait que l'énergie est calculée conformément à la formule

   $$E(i) = \sum_{u=0}^{i-1} \left| \Delta y_Q (u, i-1-u) \right|^K$$

   i étant le numéro d'un groupe de coefficients, k pouvant avoir les valeurs 1,2,3... et $\Delta y_Q$ (u, i-1-u) représentant le signal de différence quantifié des coefficients (u, i-1-u).

4. Procédé suivant la revendication 2, caractérisé par le fait que l'énergie est calculée conformément à la formule

   $$E(i) = \sum_{u=0}^{i-1} (\Delta y_Q (u,i-1-u))^2$$

   $\Delta Y_Q$ (u, i-1-u) représentant le signal de différence quantifié des coefficients (u, i-1-u).

5. Procédé suivant la revendication 2, caractérisé par le fait que l'énergie calculée conformément à la formule

   $$E(i) = \sum_{u=0}^{i-1} \left| \Delta y_Q (u,i-1-u) \right|$$

   $\Delta y_Q$ (u,i-1-u) représentant le signal de différence quantifié des coefficients (u,i-1-u).

6. Procédé suivant l'une des revendications précédentes, caractérisé par le fait que pour toutes les gammes d'amplitudes du signal devant être quantifié, on utilise respectivement des intervalles identiques de quantification de sorte qu'on obtient ce qu'on appelle une quantification linéaire.

7. Procédé suivant la revendication 6, caractérisé par le fait que la quantification est réalisée en fonction de l'énergie du groupe de coefficients et qu'à cet effet, on choisit une courbe faisant partie de quatre courbes caractéristiques linéaires de quantification, dont les intervalles de quantification diffèrent respectivement du facteur 2.

8. Procédé suivant l'une des revendications 2 à 7, caractérisé par le fait que les groupes de coefficients sont réunis par blocs pour former un groupe supérieur, qui est défini respectivement par un premier groupe de coefficients caractérisé par $N_0$ et par un dernier groupe de coefficients caractérisé par $N_D$, dont l'énergie est pour la première fois ou pour la dernière fois supérieure à un seuil et dans lequel peuvent apparaitre également des groupes de coefficients, dont les énergies sont inférieures à ce seuil.

9. Procédé suivant la revendication 8, caractérisé par le fait que des énergies globales sont déterminées, pour les groupes supérieurs de coefficients, à partir des énergies déjà calculées des groupes de coefficients.

10. Procédé suivant la revendication 9, caractérisé par le fait que les groupes supérieurs de coefficients sont répartis, du point de vue de leur énergie globale, en quatre classes, qui correspond à une subdivision des valeurs possibles de l'énergie totale en quatre intervalles, et que la première classe, associée à l'intervalle le plus bas de l'énergie totale, n'est jamais transmise, tandis que les groupes supérieurs de coefficients, associés aux trois autres classes, pour lesquelles l'énergie totale est supérieure, sont codés et transmis.

11. Procédé suivant la revendication 10, caractérisé par le fait que pour chaque classe de groupes supérieurs de coefficients, il existe une association propre choisie de façon fixe, à l'aide de laquelle des tableaux des codes de Huffman sont associés aux coefficients.

12. Procédé suivant l'une des revendications précédentes, caractérisé par le fait que le contenu de la mémoire d'images n'est ajouté au signal de différence quantifié et la somme ainsi formée n'est enregistrée en surinscription sur le contenu de la mémoire d'images que lorsque le coefficient, c'est-à-dire le signal de différence quantifié, est transmis, que, sinon, l'addition n'est pas réalisée et il ne se produit aucun enregistrement en surinscription sur le contenu de la mémoire d'images.

13. Procédé suivant l'une des revendications précédentes, caractérisé par le fait que le flux non uniforme de données des coefficients devant être transmis est transféré, à l'aide d'un tampon, dans un flux de données à débit constant.

14. Procédé suivant les revendications 10 et 13, caractérisé par le fait que l'état de remplissage du tampon est contrôlé à l'aide d'un dispositif de régulation du tampon, par le fait que le seuil servant à déterminer si un groupe supérieur de coefficients doit être ou non transmis, est modifié, sans mémorisation, en fonction du degré de remplissage de la mémoire tampon.

15. Procédé suivant les revendications 8 et 13 ou suivant la revendication 14, caractérisé par le fait que l'état de remplissage du tampon est contrôlé à l'aide d'un dispositif de régulation du tampon par le fait que le nombre maximum des groupes des coefficients devant être transmis est modifié, sans mémorisation, en fonction du degré de remplissage de la mémoire tampon.

16. Procédé suivant la revendication 13 ou l'une des revendications 14 ou 15 ou suivant les revendications 14 et 15, caractérisé par le fait que l'état de remplissage du tampon est contrôlé à l'aide d'un dispositif de régulation du tampon par le fait que la résolution du quantificateur, c'est-à-dire l'intervalle de quantification, est modifiée sans mémorisation en fonction du degré de remplissage de la mémoire tampon.

17. Procédé suivant les revendications 14,15 et 16, caractérisé par le fait que le nombre maximum des groupes de coefficients ($N_{DMax}$) devant être transmis est déterminé au moyen de la relation

$$N_{DMAX} = \left\{ \begin{array}{l} 31 \text{ lorsque } B \leq B_N \\ \text{trun } \dfrac{14 \ B+3 \ B_N-17}{B_N-1} \text{ lorsque } B > B_N \end{array} \right\}$$

à partir du degré B de remplissage tampon, trun (...) (truncated, c'est-à-dire tronqué) étant la fonction "troncature" de l'expression représentée et $B_N$ se situant de préférence dans la gamme 0,3 ... 0,6, que le seuil (T) servant à déterminer si un groupe supérieur de coefficients doit être transmis ou non, est modifié conformément à la relation

$$T = \left\{ \begin{array}{l} 0 \quad \text{lorsque } B \leq B_T \\ \text{trun } [(\dfrac{B-B_T}{1-B_T} + 1)^2 - 0,5] \text{ lorsque } B > B_T \end{array} \right\}$$

$B_T$ étant situé de préférence dans la gamme 0,6...0,8, et que la résolution de quantification D est déterminée à partir d'une grandeur intermédiaire D*, qui est obtenue, à partir du degré B de remplissage de la mémoire tampon, conformément à la relation

$$\Delta\star = \left\{ \begin{array}{l} \text{lorsque } B \geq B_D \\ \Delta 0 \quad B \\ \dfrac{}{8} \ (7 \ \dfrac{}{B} + 1) \qquad \text{lorsque } B < B \end{array} \right\}$$

la résolution de quantification $\Delta$ étant déterminée à partir de cette grandeur intermédiaire $\Delta^*$ conformément aux conditions suivantes lorsqu'on a 0,75 $\Delta 0 < \Delta^*$, on a alors $\Delta = {}_{\Delta 0}$, lorsqu'on a 0,375 $\Delta 0 < \Delta^* < 0,75 \ _{\Delta 0}$, on a alors $\Delta = {}_{\Delta 0}/2$, lorsqu'on a 0,1875 $\Delta 0 < \Delta^* < 0,375 \ \Delta 0$, on a alors $\Delta = \Delta 0/\overline{4}$, et lorsqu'on a $\Delta^*$, 0,1875 $_{\Delta 0}$, on a alors $\Delta = {}_{\Delta 0}/8$, $B\Delta$ possédant de préférence une valeur comprise entre 0,4 et 0,6.

18. Procédé suivant la revendication 17, caractérisé par le fait que pour les relations pour $N_{DMAX}$, T et des valeurs tabulées, sont déterminées des valeurs tabulées, qui sont adressées sur la base des six bits de poids les plus élevés du degré de remplissage du tampon.

19. Procédé suivant l'une des revendications précédentes, caractérisé par le fait que pour réaliser le codage, on utilise sept tableaux de codes possédant des mots de longueurs variables, un tableau de codes (1) étant prévu pour des énergies très faibles et un tableau de codes (i) pour des énergies très élevées, et respectivement le tableau de codes (i) différant du tableau de codes (i-1) par le fait qu'il est produit pour une énergie supérieure du facteur 4.

20. Procédé suivant les revendications 8 et 19, caractérisé par le fait qu'un huitième tableau de codes est prévu pour le codage des groupes supérieurs devant être transmis et qu'il est prévu un tableau auxiliaire, à l'aide duquel sont choisis, pour chaque groupe supérieur devant être transmis, les numéros de mots de code, associés à ce groupe supérieur, du huitième tableau de codes.

21. Procédé suivant la revendication 20, caractérisé par le fait qu'à l'aide du huitième tableau de codes, on sélectionne, pour chaque combinaison des groupes de coefficients $N_0$ et $N_d$, qui délimitent le groupe supérieur, un numéro associé de mot de code du huitième tableau de codes.

22. Procédé suivant les revendications 19,20 ou 21, caractérisé par le fait que les tableaux de code prévus sont des tableaux de codes de longueurs variables

# FIG 1

T : Transformation
Q : Quantisierer
P : Prädiktor
M: Memory (DPCM-Speicher)
C : Codierung

x(k,l,t) :digitales Bildsignal

y(u,v,t) :Transformationskoeffizienten

$y_p(u,v,t-1)$:vorhergesagte Koeffizienten

$\Delta y_Q$ :quantisierte Prädiktionsfehler

$\Delta y_C$ :quantisierte und codierte Prädiktionsfehler

FIG 2

Sender

Transformation

Von Quelle
Bildsignal

Kanal-
Codierung

Kanal

Kanal-
Decodierung

Rücktransformation

Rekonstruiertes
Bildsignal

Zur Senke

Empfänger

EP 0 201 679 B1

FIG 3

# FIG 4

EMPFÄNGER

## FIG 5a

Diagonalen 1 bis 31
1 2 3 4 5 6 7 _ _ _      16
                  18
                  20
                  31

## FIG 5b

Begrenzung der Rate durch
Weglassen von Diagonalen

## FIG 5c

Übertragene Obergruppe
1.) $N_0 \leq 3$
$1 \leq N_D \leq N_D$ Max
$N_D$    $N_D$ Max

## FIG 5d

2.) $4 \leq N_0 \leq N_0$ Max
$4 \leq N_D \leq N_D$ Max
$N_0$      $N_D$ $N_D$ Max

# FIG 6a

# FIG 6b

<u>PUFFERREGELUNG</u>

# FIG 6c

Es gilt: $0 < B_\Delta \leq B_N < B_T < 1$